# EUROPEAN PATENT APPLICATION

(11) **EP 4 344 813 A1**
(43) Date of publication of application: **03.04.2024**
(21) Application number: 23197660.6
(22) Date of filing: 15.09.2023
(51) Int. Cl.: B23K 26/03, B23K 26/042, B23K 26/082, B23K 26/08, B23K 26/22, H01M 50/213, H01M 50/505, H01M 50/516, B23K 37/04, B23K 101/36

(54) **SYSTEM AND METHODS FOR MANUFACTURING A BATTERY MODULE**

(30) Priority: 15.09.2022 US 202263406954 P
(71) Applicant: ATS Automation Tooling Systems Inc., Cambridge, Ontario N3H 4R7 (CA)
(72) Inventor: MORENO, Erick, Cambridge (CA); BIAFORE, Robert, Cambridge (CA)
(74) Representative: Noble, Nicholas

(57) **Abstract**

A method of manufacturing a battery module having a plurality of battery cells to be welded to a conductive lattice structure is provided. A region of a battery pallet clamped to the conductive lattice structure is scanned to determine a location of each battery cell terminal in the region relative to a respective welding protrusion from a first welding apparatus viewpoint, and a weld file used by a welding apparatus is updated based on the location of each battery cell terminal relative to the respective welding protrusion.

## Description

### CROSS-REFERENCE TO RELATED APPLICATIONS

This application claims priority to US Provisional Patent Application No. 63/406,954, filed on September 15, 2022.

### TECHNICAL FIELD

The present disclosure relates to manufacturing battery modules, in particular to manufacturing a battery module comprising a plurality of battery cells.

### BACKGROUND

Battery packs for use in automotive, residential or industrial applications typically includes multiple modules each containing hundreds to thousands of battery cells connected together to achieve a desired voltage. The battery modules require the individual battery cells to be connected together by a conductive lattice within the module, however the cylindrical shape and size of the cells presents challenges in ensuring consistent placement within the module during the assembly to ensure the alignment of the battery electrodes with the lattice. The battery module can be assembled using a robot for welding the battery cells in a fixture to the conductive lattice that defines the circuit of the battery module, however inaccurate or faulty welds between the lattice and the batteries can impact the performance of the battery module and/or the associated battery pack. Ensuring accuracy of the welds is important in providing efficient assembly and mitigating future failures and the performance of the battery module.

When welding the battery cells to the conductive lattice structure, the individual battery cells are typically welded using laser welding. The welding laser is moved between each welding location, which is a cumbersome process and is prone to errors based upon inaccuracy in battery positions relative to the conductive lattice. Any error in the welding process can result in failure of the battery module.

Accordingly, an improved system and method for manufacturing battery modules comprising a plurality of battery cells remains highly desirable.

### BRIEF DESCRIPTION OF THE DRAWINGS

Features and advantages of the present disclosure will become apparent from the following detailed description, taken in combination with the appended drawings, in which:
FIGs. 1A-B show an exemplary battery module manufacturing station that may be used for welding a battery pallet in accordance with the present disclosure;
FIGs. 2A-B show the battery module manufacturing station with a lift system in a raised and lowered position, respectively;
FIGs. 3A-G show the battery module clamped to the clamping plate and configured for welding;
FIG. 4 shows a method of manufacturing a battery module;
FIG. 5 shows a method of welding the battery module to a conductive lattice structure;
FIG. 6 shows a further aspect of the method of FIG. 6; and
FIG. 7 shows a hardware schematic of a welding system for welding a battery module.

It will be noted that throughout the appended drawings, like features are identified by like reference numerals.

### DETAILED DESCRIPTION

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions. One general aspect includes a method of manufacturing a battery module comprising a plurality of battery cells. The method includes clamping a battery pallet containing a plurality of battery cells to a clamping plate to cause a top portion of each of the plurality of battery cells to be in contact with the conductive lattice structure for welding, the conductive lattice structure may include an electrical bus bar and a plurality of welding protrusions coupled to the bus bar, the battery pallet clamped to provide contact between a terminal of each of the plurality of battery cells and a respective welding protrusion; scanning a region of the battery pallet to determine a location of each battery cell terminal in the region relative to the respective welding protrusion from a first welding apparatus viewpoint, where the battery pallet may include a plurality of pre-defined regions each may include a plurality of battery cells; and updating a weld file used by a welding apparatus based on the location of each battery cell terminal relative to the respective welding protrusion. Other embodiments of this aspect include corresponding computer systems, apparatus, and computer programs recorded on one or more computer storage devices, each configured to perform the actions of the methods.

Implementations may include one or more of the following features. Updating the welding file may be performed based on the location of each battery cell terminal relative to the respective welding protrusion and an expected location of the battery cell terminal relative to the respective welding protrusion. The method may include welding each battery cell terminal and the respective welding protrusion from the first welding apparatus viewpoint using the updated welding file. Updating the weld file may comprise dynamically updating the weld file. The weld file defines expected welding positions for welding each battery cell terminal and the respective welding protrusion from the first welding apparatus viewpoint, and where updating the weld file may include calculating an offset between the expected welding positions and the locations of each battery cell terminal relative to the respective welding protrusion. Determining the location of each battery cell terminal comprises scanning to locate two points on the battery cell terminal, and determining a center of the battery cell based on the location of the two points and a known radius of the battery cell. The clamping plate provides a plurality of apertures to facilitate welding the conductive lattice structure to each of the plurality of battery cells. Scanning the region of the battery pallet further may include determining if a gap exists between the clamping plate and the welding region, and if no gap exists, the method may include stopping the welding process. The clamping plate may include tapered portions along at least a portion of the apertures to facilitate welding from the first apparatus viewpoint. The plurality of apertures of the clamping plate expose first weld sites between first cell terminals of the plurality of battery cells and respective of the plurality of welding protrusions, and where after all first cell terminals have been welded to the respective welding protrusions, the method further may include clamping the battery pallet to a second clamping plate providing a second plurality of apertures to facilitate welding the conductive lattice structure to each of the plurality of battery cells, where the second plurality of apertures of the second clamping plate expose second weld sites between second cell terminals of the plurality of battery cells and respective of the plurality of welding protrusions. The method may include moving the welding apparatus to a second welding apparatus viewpoint; scanning a second region of the battery pallet to determine a location of each battery cell terminal in the second region relative to the respective welding protrusion from the second welding apparatus viewpoint; updating the weld file used by the welding apparatus based on the location of each battery cell terminal relative to the respective welding protrusion; and welding each battery cell terminal and the respective welding protrusion in the second region of the battery pallet from the second welding apparatus viewpoint. Implementations of the described techniques may include hardware, a method or process, or computer software on a computer-accessible medium.

One general aspect includes a welding system for welding a battery pallet having a plurality of battery cells to a conductive lattice structure. The welding system also includes an optical scanner configured to scan a region of the battery pallet clamped to the conductive lattice structure to determine a location of each battery cell terminal in the region relative to a respective welding protrusion of the conductive lattice structure from a first welding apparatus viewpoint; and a processing unit configured to update a weld file used by a welding apparatus based on the location of each battery cell terminal relative to the respective welding protrusion. Other embodiments of this aspect include corresponding computer systems, apparatus, and computer programs recorded on one or more computer storage devices, each configured to perform the actions of the methods.

Implementations may include one or more of the following features. The welding system where the optical scanner may include a line scanner, a vision system, or an optical camera. The optical scanner may include a scanning laser of the welding apparatus. The welding system may include the welding apparatus. Implementations of the described techniques may include hardware, a method or process, or computer software on a computer-accessible medium.

The present disclosure provides welding methods and systems for manufacturing of battery modules having a plurality of battery cells. In particular the disclosure is directed to the process of welding electrical contacts from a conductive lattice structure to each of the plurality of battery cells. The welding methods and systems are configured to perform welding of multiple battery cells within a single field-of-view of the welding apparatus rather than moving the welding apparatus for welding each individual battery cell. Accordingly, multiple welds of battery cells within the single field-of-view of the laser can be performed at high speeds, representing substantial time savings and increased throughput.

However, placing multiple battery cells in a pallet and then welding the battery cells to a conductive lattice to manufacture the module presents some extra challenges. In order to place the batteries in the pallet there has to be some clearance. In order to handle varying battery heights, the pallets have springs. These two required elements have a secondary effect that the battery positions can move relative to the lattice. First, there may be anomalies between the desired/nominal location and angular orientation of a particular battery cell, and the actual location and angular orientation after a cell has been placed by the robot. Furthermore, variations in the conductive lattice structure connecting to the anode or cathode of the battery and/or associated welding mask may be different from the desired/nominal location. As such, there is a need to precisely identify the location of each battery cell prior to performing the weld.

Therefore, in accordance with the present disclosure, a method of welding a battery module having a plurality of battery cells comprises scanning a region of the battery module clamped to the conductive lattice structure to determine a location of each battery cell terminal in the region relative to the respective welding protrusion from a first welding apparatus viewpoint, and updating a weld file which represents the nominal positon of the weld which is used by a welding apparatus based on the location of each battery cell terminal relative to the respective welding protrusion.

Accordingly, a precise location of a particular battery cell terminal relative to a respective welding protrusion for the associated anode or cathode is determined and used to update the weld file in the event that the actual welding position based on the location of the battery cell terminal relative to the respective welding protrusion is offset from an expected welding position.

The present disclosure may be particularly advantageous for use in manufacturing battery modules for electric vehicles, where the battery cells of a battery pallet are welded to the conductive lattice structure, and the welded battery pallets are combined into a larger pack to form a battery module. However, it will also be appreciated that the systems and methods for welding a battery cells to a conductive lattice structure for creating a battery module is disclosed herein can be applied more generally to any application where a plurality of battery cells are to be welded or any welding application that requires individually corrected weld placement due to either the manufacturing process and/or part variations.

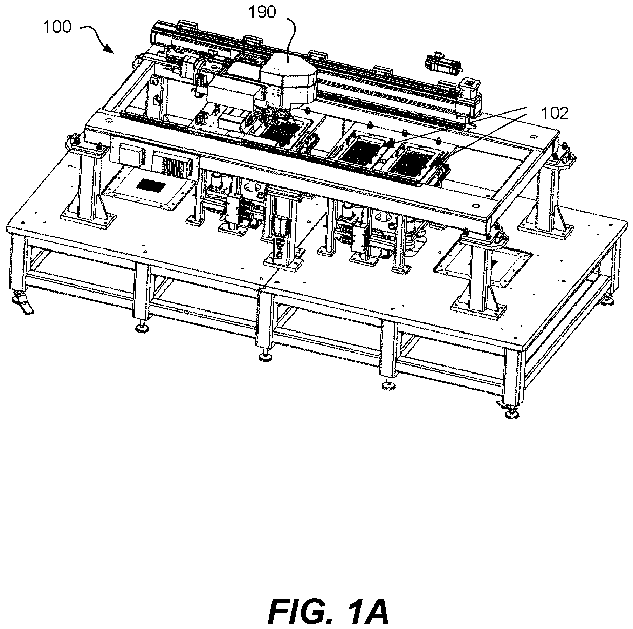

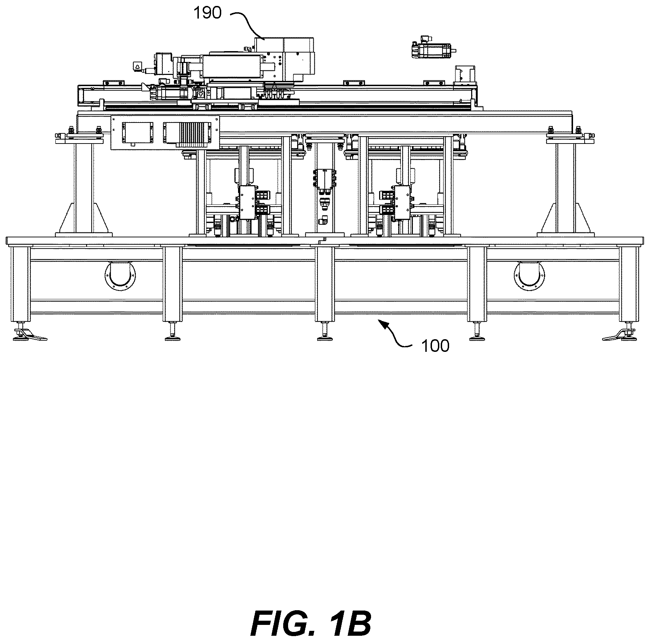

Embodiments are described below, by way of example only, with reference to Figures 1-7.

FIGs. 1A-B show an exemplary battery module manufacturing station 100 that may be used for welding a battery module in accordance with the present disclosure. More specifically, FIG. 1A shows a perspective view of the battery module manufacturing station 100 and FIG. 1B shows a front view of the battery module manufacturing station 100. The battery module manufacturing station 100 comprises one or more clamping plates 102 for use in clamping a battery pallet to a conductive lattice structure for welding, as described in more detail herein. The clamping plates 102 each comprise a plurality of apertures to facilitate welding a conductive lattice structure to each anode (-) or cathode (+) of the plurality of battery cells. The plurality of apertures are configured to expose weld sites between cell terminals of the batteries and welding protrusions of the conductive lattice structures. There may in particular be a first clamping plate with apertures configured to expose first weld sites for first cell terminals (e.g. cathode cell terminals), and a second clamping plate with second apertures configured to expose second weld sites for second cell terminals (e.g. anode cell terminals). There may also be multiple of the same clamping plates. In FIGs. 1A and 1B, there are four clamping plates shown, with two negative (anode) clamping plates and two positive (cathode) clamping plates.

The battery module manufacturing station 100 is configured to be used with a welding apparatus 190, which may for example be a laser welding apparatus. A gantry system may be used to move the welding apparatus 190 to different clamping plates and/or different regions of the same clamping plate to perform welding. Since the battery pallet is clamped to the conductive lattice structure for welding, multiple high-speed welds can be performed by the welding apparatus 190. The welding apparatus 190 can include one or more weld monitoring systems, such as a Laser Depth Dynamics (LDD) in process weld monitoring system to determine the quality of the weld. The LDD weld monitoring system, or an additional optical or laser system may be utilized to scan the battery cells when placed within the battery pallet to determine positioning of the battery terminals and lattice contacts prior to initiating welding. Alternatively a camera, or some other system that allows an inline view of the welding area may be used. By inline, a scan head comes with an adapter to allow the laser to be connected, but can also come with a camera adapter to look through the same path the laser is travelling. The LDD weld monitoring system can then verify the actual welds after they occur.

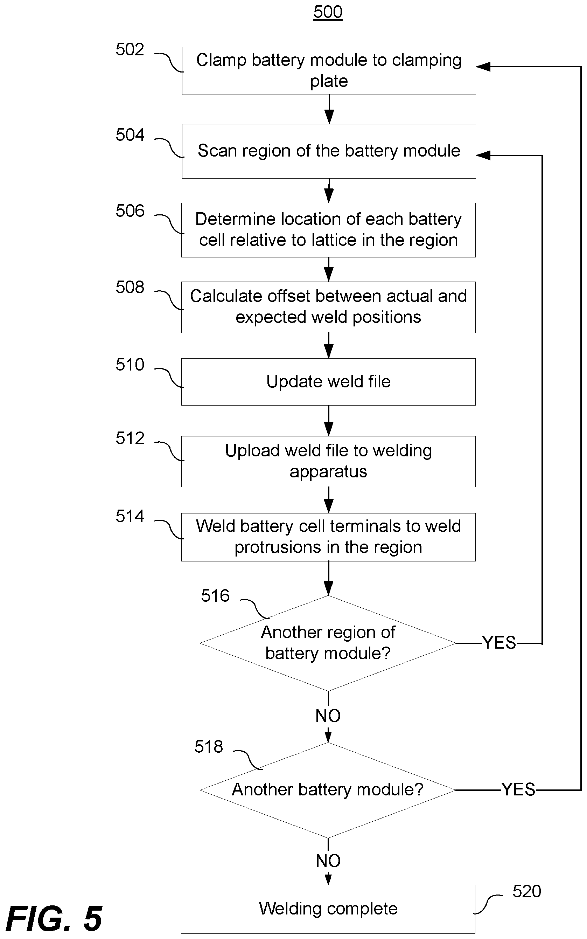

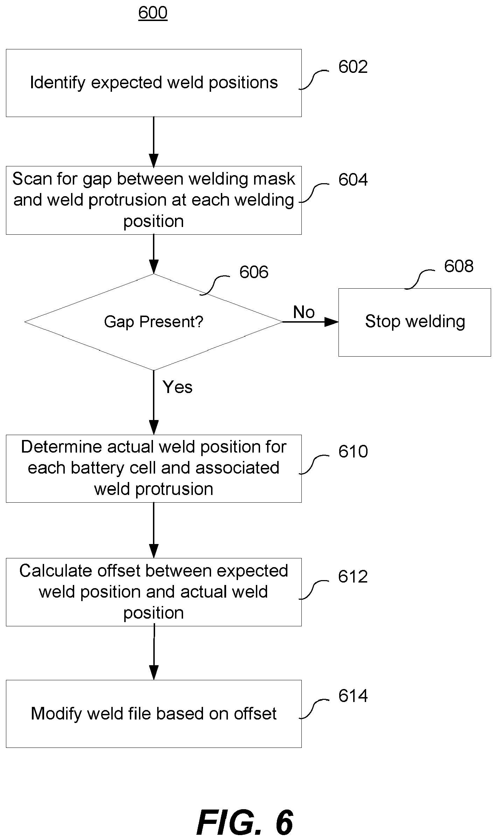

In one example implementation, a battery module comprising a plurality of battery cells is clamped to a conductive lattice structure using a first clamping plate. The first clamping plate exposes first weld sites for welding the cathode cell terminals of the plurality of battery cells. The welding apparatus 190 may then weld all cathode cell terminals of the battery cells to the conductive lattice structure. The battery pallet may then be clamped to a second clamping plate that exposes second weld sites for welding the anode cell terminals of the plurality of battery cells. The welding apparatus 190 may then weld all anode cell terminals of the battery cells to the conductive lattice structure. Where there are multiple battery pallets clamped to multiple clamping plates, the welding apparatus 190 may perform welding for all the cell terminals of the multiple battery pallets. Particular welding methods for welding the battery pallet are described further with reference to FIGs. 5 and 6.

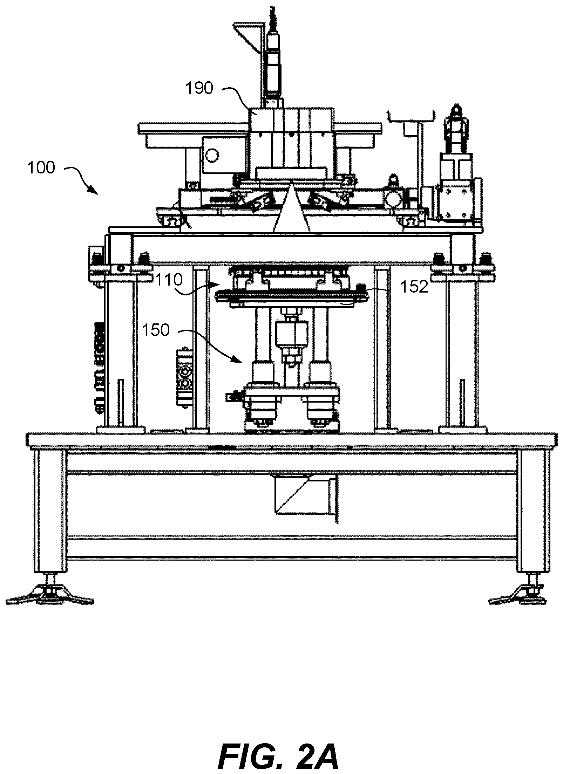

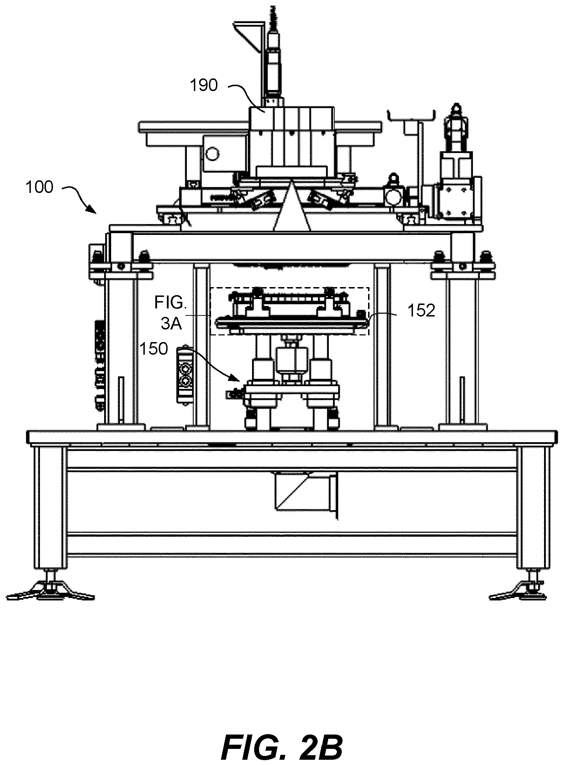

FIGs. 2A-B show the battery module manufacturing station 100 with a lift system in a raised and lowered position, respectively. Specifically, FIGs. 2A-B show side views of the battery module station 100 of FIGs. 1A-B, with a lift system 150 of the battery module station actuated between a raised position (FIG. 2A) and a lowered position (FIG. 2B).

The lift system 150 comprises a pallet lifting plate 152, which is configured to interface with battery pallet 110. As shown in FIG. 2A, the lift system 150 is raised via an actuator to lift the battery pallet and clamp the battery pallet against the clamping plate so that battery cells are in contact with the conductive lattice structure. In FIG. 2B, the lift system 150 lowers the pallet containing the battery module after the battery cells have been welded to the conductive lattice within the module. In this lowered position, a new battery pallet can be placed on the pallet lifting plate 152, thus providing a loading position where battery cells can be arranged to form the battery module. Various types of actuators may be used as part of the lift system to actuate the pallet frame, and may for example be a pneumatic actuator, a servo motor, etc.

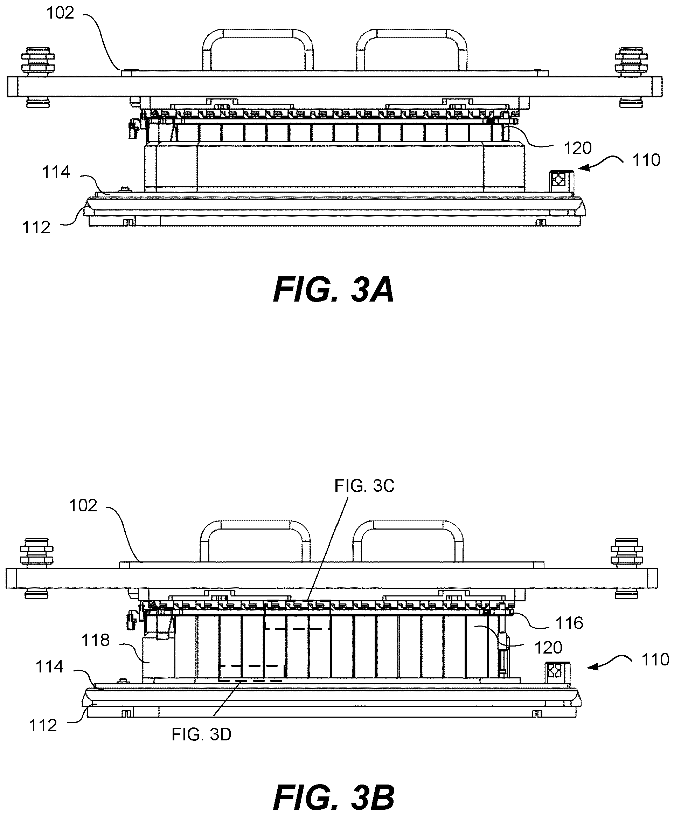

FIGs. 3A-G show the battery pallet 110 clamped to the clamping plate 102 and configured for welding. Specifically, FIG. 3A shows an enlarged view as indicated in FIG. 2B. The battery pallet 110 comprises a plurality of battery cells 120 arranged in a pallet assembly forming a battery module. The pallet assembly comprises a pallet frame 112 that is configured to be actuated by the lift system 150 towards and away from the clamping plate 102.

A pallet base plate 114 is disposed on the pallet frame 112. The pallet base plate 114 is configured to support the plurality of battery cells 120 forming the battery module thereon to form a battery pallet, and when the battery pallet is clamped to the clamping plate 102 the pallet base plate 114 is in a clamped position such that the pallet base plate 114 and the clamping plate 102 cause the battery cells 120 on the pallet base plate 114 to be in contact with the conductive lattice structure for welding element.

FIG. 3B shows the battery pallet 110 clamped to the clamping plate 102 as shown in FIG. 3A, with portions of the battery pallet removed to more clearly show the pallet assembly and the plurality of battery cells 120. The pallet base plate 114 comprises a plurality of holes or indentations configured to support the plurality of battery cells 120. The pallet assembly may also comprise a cell holder 116 arranged at the upper portion of the battery cells 120 and configured to further support the plurality of battery cells 120 on the pallet base plate 114. The cell holder 116 may similarly comprise a plurality of holes or indentations to support the plurality of battery cells 120. The pallet assembly may also comprise side walls 118 that surround the plurality of battery cells 120 arranged on the pallet base plate 114. The front surface of the side walls 118 is omitted from FIG. 3B to more clearly show the plurality of battery cells 120 arranged on the pallet base plate 114.

To weld the plurality of battery cells 120 to a conductive lattice structure, there needs to be sufficient contact between the terminal of the battery cells 120 and the portion of the conductive lattice being welded. Since the battery pallet 100 comprising the plurality of battery cells 120 arranged on the pallet base plate 114 is used for performing multiple high-speed welds, and the laser welding is performed from above, it is difficult to provide a contact force to individual cells. In this exemplary battery module manufacturing station, the pallet assembly comprises a spring assembly at the bottom of the pallet configured to provide a constant upward force to each of the battery cells 120 as the battery cells 120 are brought into contact with the conductive lattice structure. The spring also deals with variations in battery height and brings the batteries up to a hard surface / fixed surface, which simplifies the welding. The fixed welding position at the same distance from the laser allows for a more repeatable weld.

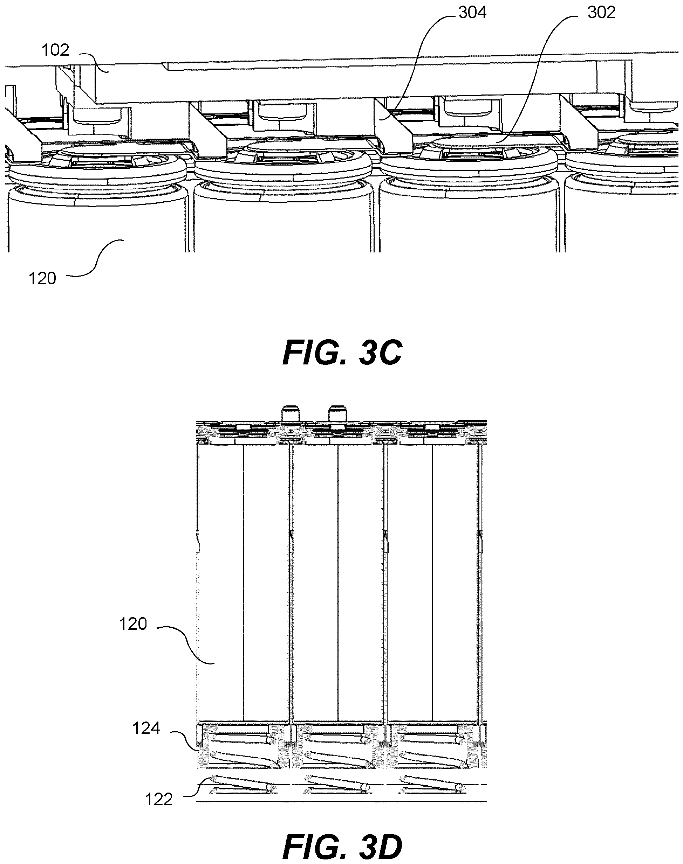

FIG. 3C shows an enlarged view of FIG. 3B, showing cell terminals of the battery cells 120 clamped to welding protrusions 302 of a conductive lattice structure, and held in place by clamping fingers 304 coupled to the clamping plate 102. In this example, the battery cells are cylindrical cells with both anode and cathode terminals on a single end of the battery cell. The cathode cell terminal may be located in a middle portion at the end of the battery cell, and the anode cell terminal may be located in an outer portion at the end of the battery cell. It would also be appreciated that other types of battery cells could be used instead of the cylindrical cells shown, with appropriate modifications to the battery module manufacturing station.

FIG. 3D shows an enlarged view of the spring assembly in the pallet assembly as denoted in FIG. 3B, with the pallet base plate 114 removed to more clearly shown the spring assembly. As seen in FIG. 3D, the spring assembly comprises a plurality of springs 122, which are arranged on the pallet base plate. The spring assembly further comprises a plurality of spring caps 124 respectively coupled to the plurality of springs 122, and each of the plurality of spring caps 124 is configured to interface with a respective battery cell 120.

As the pallet base plate 114 is actuated to the clamped position and the plurality of battery cells 120 are brought into contact with a clamping finger 304 coupled to the clamping plate 102 and welding protrusion 302 of the conductive lattice structure, the springs 122 begin to compress and apply an upwards force to the battery cells 120 via the spring caps 124. The springs 122 may be selected depending upon the specific application in order to provide sufficient constant upwards force to the battery cells 120. There may generally be no specific upper threshold on the clamping force, other than a force that would damage the battery cell or welding protrusion of the conductive lattice structure. In some applications, the springs 122 may be selected to provide a force of 35 Newtons to the battery cells 120 when compressed by 3 mm.

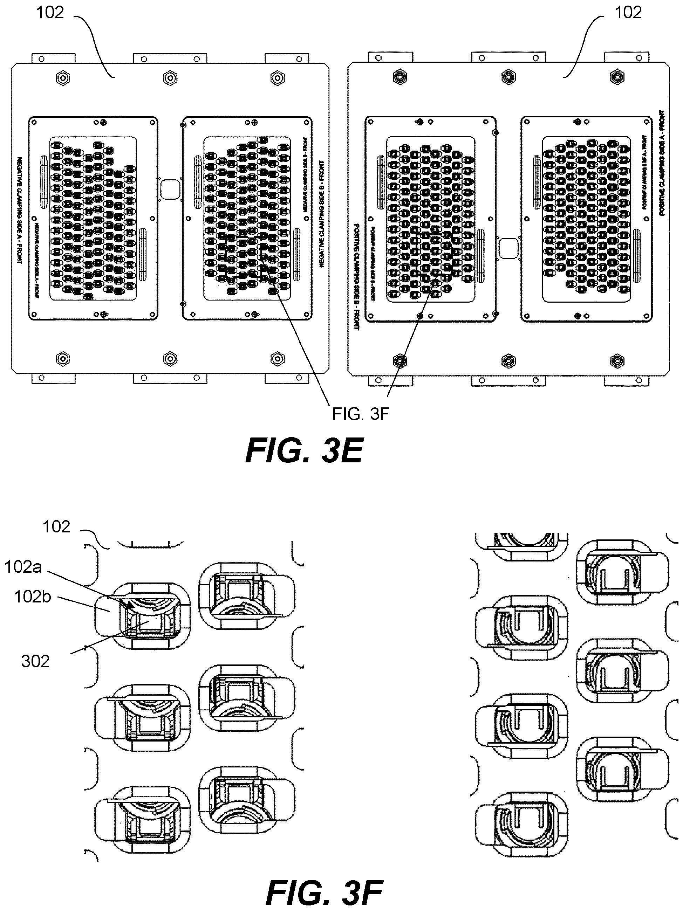

FIG. 3E shows a top view of FIG. 3B, which more clearly shows the clamping plate 102. FIG. 3F shows an enlarged view of an area of the clamping plate 102. As previously described, the clamping plate 102 provides a plurality of apertures 102a that expose weld sites between the battery cell terminals and welding protrusions 302 of the conductive lattice structure to facilitate welding the conductive lattice structure to each of the plurality of battery cells. Accordingly, the clamping plate 102 may be provided with apertures according to the cell terminal to be welded to the conductive lattice structure (i.e. different clamping plates are used for welding anode/cathode cell terminals).

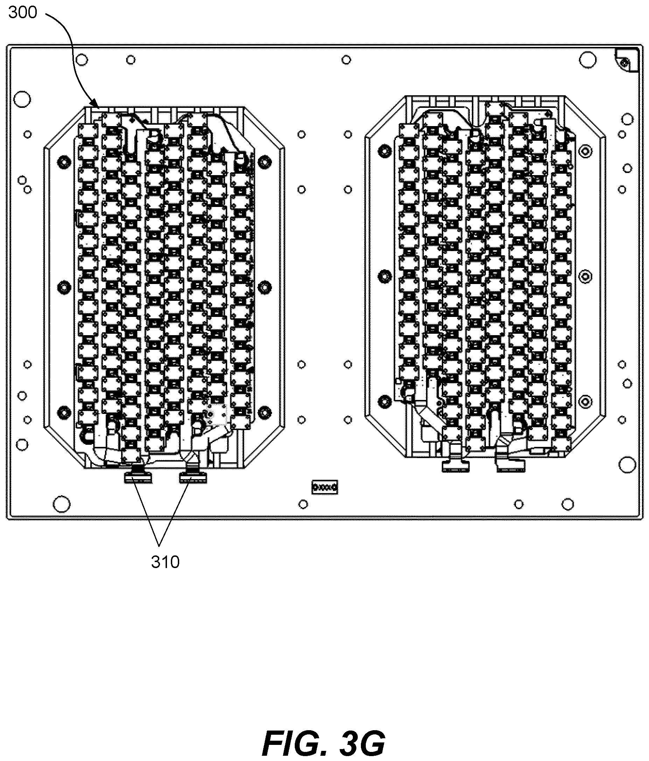

FIG. 3G shows the top view depicted in FIG. 3E, with the clamping plate 102 removed, thus showing the conductive lattice structure 300. The plurality of battery cells are brought into contact with the conductive lattice structure 300 from below as previously described. The conductive lattice structure 300 comprises a plurality of welding protrusions 302 corresponding to each battery cell terminal, as also shown in FIGs. 3C and 3F. The plurality of welding protrusions 302 are coupled to electric bus bars 310, which are coupled to anode and cathode terminals.

Referring back again to FIG. 3E, since the plurality of battery cells 120 arranged in the battery module 110 are simultaneously brought into contact with the conductive lattice structure and are configured for welding, multiple high-speed welds can be performed as previously described. Further, in accordance with the present disclosure multiple weld sites may be welded from a single welding apparatus location. The clamping plate 102 should therefore be sufficiently thin so as not to obscure the laser from the welding apparatus, which may not be directly overhead of the weld site. The clamping plate 102 may also comprise tapered portions 102b along at least a portion of the apertures 102a to facilitate welding from a single welding apparatus location (i.e. to facilitate the welding laser reaching the welding site at an angle).

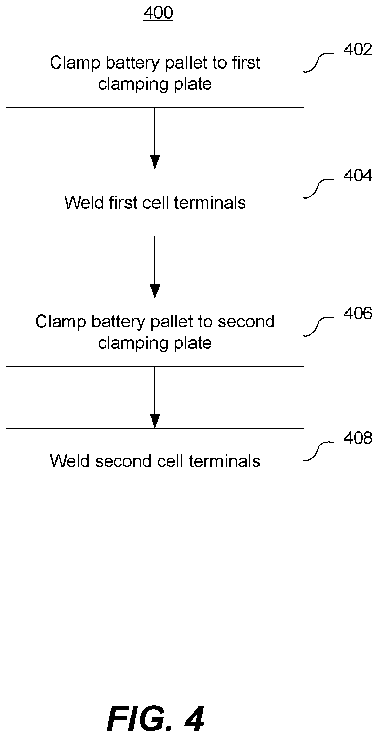

FIG. 4 shows a method 400 of manufacturing a battery module. The method comprises clamping a battery pallet containing a plurality of battery cells to a first clamping plate (402). The battery pallet containing the plurality of battery cells is clamped to the clamping plate by positioning of a battery pallet below the welding plate when the cell terminals of the plurality of battery cells are in contact with the conductive lattice structure, and a pre-determined contact force is applied to the battery cells by the plurality of springs, as previously described.

The method further comprises welding the first cell terminals to a respective welding protrusion of the conductive lattice structure (404). As previously described, the clamping plate comprises a plurality of apertures that expose first weld sites between first cell terminals of the plurality of battery cells and respective of a plurality of welding protrusions of the conductive lattice structure. In particular implementations, the first cell terminals that are welded may be the negative ell terminals (anode), as these anode cell terminals may have a smaller cross-sectional area for performing the welding, and therefore it may be important to weld these cell terminals first. Further, the welding of the first cell terminals may advantageously be performed region-by-region, where welding the cell terminals within a given region is performed from a single welding apparatus viewpoint. A method of welding the battery cells to a conductive lattice structure is described in more detail with reference to FIGs. 5 and 6.

The battery cells disposed in a battery pallet are clamped to a second clamping plate (406). The second clamping plate provides a second plurality of apertures to facilitate welding the conductive lattice structure to each of the plurality of battery cells, and the second plurality of apertures expose second weld sites between second cell terminals (e.g. cathode cell terminals) or a second subset of anode terminals of the plurality of battery cells and respective of the plurality of welding protrusions. The battery pallet is clamped to the second clamping plate when the cell terminals of the plurality of battery cells are in contact with the conductive lattice structure, and a pre-determined contact force is applied to the battery cells by the plurality of springs.

The method further comprises welding the second cell terminals to a respective welding protrusion of the conductive lattice structure (408). Again, the welding of the second cell terminals may advantageously be performed region-by-region, where welding the cell terminals within a given region is performed from a single welding apparatus viewpoint.

FIG. 5 shows a method 500 of welding the battery pallet to a conductive lattice structure. The battery pallet containing the battery module is clamped to the clamping plate (502) to cause a top portion of the battery cells to be in contact with the conductive lattice structure for welding. Various clamping assemblies could be used, however a particularly advantageous clamping assembly may be to use a spring assembly to address variations in the battery height when bringing the batteries up to a hard surface/fixed surface, which simplifies the welding process. Further as previously described the spring assembly ensures that a constant upward force is applied to the bottom of the battery cells to ensure good contact between the top battery cell terminals and the weld protrusion of the conductive lattice at the weld site at a fixed distance ensuring repeatability. A plurality of battery cells are arranged in the pallet assembly of the battery plate, and the conductive lattice structure is inserted between the plurality of battery cells and the clamping plate.

A region of the battery pallet is scanned (504). In accordance with the present disclosure, multiple weld sites are welded from a single viewpoint. A battery pallet may be divided into regions of battery cells for which a welding apparatus performs welding of all the battery cells in a given region from a single welding apparatus viewpoint. The welding regions are limited by the angle at which an incident welding laser can successfully weld a weld site (as for example seen in FIGs. 2A and 2B), and the number of battery cells within a given welding region is thus influenced by a spacing between the battery cells in the battery pallet, a thickness of the clamping plate, etc. Accordingly, a welding region is application-specific but comprises multiple cells so as to achieve the benefit of increased throughput and reduced welding time by welding multiple battery cells without having to move the welding apparatus. As an example, a battery module may comprise 108 cylindrical battery cells, which are divided into 8 regions ranging from 16 to 9 battery cells each.

A location of each battery cell relative to a respective welding protrusion of the conductive lattice is determined from the single apparatus viewpoint (506), which determines an actual welding position of the weld site. In particular, the scanning may look for changes in height to identify edges of the battery cell terminal and the welding protrusion. As previously described, there may be anomalies between the expected location and angular orientation of a particular battery cell, and the actual location and angular orientation after a cell has been placed by the robot. Furthermore, the expected position of the conductive lattice structure may be different from the desired/nominal location. An offset between the actual weld position as determined at 506 and the expected (ideal) weld position is calculated (508). The calculated offset is used to update a weld file used by the welding apparatus (510). The weld file defines locations of welds and the welding pattern to be performed, and the weld file represents the weld location for a battery in the nominal position. Alternatively a configuration file may be utilized with weld parameters and locations to create a weld file dynamically. The weld file is uploaded to the welding apparatus (512), and the welding apparatus performs welding (514) of the battery cell terminals to the welding protrusions of the conductive lattice structure for each of the battery cell terminals in the region. The welding apparatus may comprise an in-process weld monitoring system to ensure that the weld is satisfactory.

A determination is made if there is another region of un-welded battery cells on the battery pallet clamped to the clamping plate (516). If there is another region of the battery pallet to be welded (YES at 516), the method returns to 504. If there is not another region of the battery pallet to be welded (NO at 516), a determination is made if there is another battery pallet that requires welding (518). If there is another battery pallet to be welded (YES at 518), the method returns to 502 with clamping the battery pallet to the clamping plate, or to 504 (not shown) if the battery pallet has already been clamped to the clamping plate. If there is not another battery pallet to be welded (NO at 518), the welding is complete (520) and the method ends.

FIG. 6 shows a further aspect of the method of FIG. 5. In particular, the method 600 represents a more detailed implementation of the method features 504, 506, 508, and 510 in the method 500 when scanning the region of the battery pallet in the clamping plate to update the weld file.

In the method 600, expected welding positions are identified (602), which allows the scanning device to focus in on expected battery cell locations within the region. For each expected welding position, a scan is performed from the first welding apparatus viewpoint to look for a gap between the clamping plate and the welding protrusion (604). A determination is made if there is a gap present between the clamping plate and the welding protrusion (606). If there is no gap present (NO at 606), this means that the weld site is blocked by the clamping plate and the welding operation is stopped (608). Additional or alternatively scanning the ICB (aka lattice) to determine a clear space may be performed. A second scan for the battery location is shifted to land in the opening. The battery is then scanned to determine the offset from nominal. This is repeated on a second location of the battery. With these two points on the battery cell terminal and a known radius the center of the actual battery can be accurately determined and compared it to a nominal position.

If there is a gap present (YES at 606), this means that the weld site is accessible. A determination is made of the actual weld position for each battery cell terminal and associated weld protrusion (610). An offset between the expected weld position and the actual weld position is calculated (612), and the weld file is modified based on the offset (614).

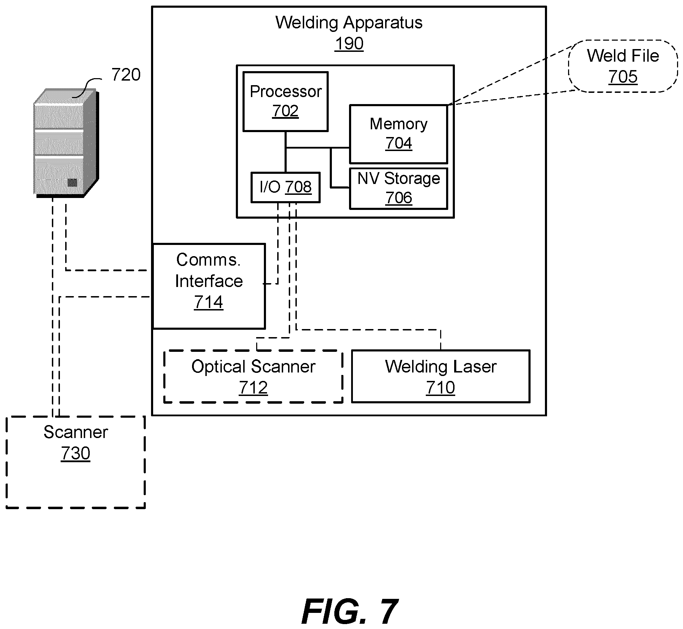

FIG. 7 shows a hardware schematic of a welding system for welding a battery module. The welding system comprises a welding apparatus 190, which is configured to perform laser welding and is equipped with a welding laser 710. The welding apparatus 190 may also be configured to perform in-process weld monitoring. The welding apparatus 190 comprises a controller having a processor 702, non-transitory computer-readable memory 704, non-volatile storage 706, and an input/output (I/O) interface 708. The memory 704 comprises instructions which, when executed by the processor 702, causes the controller to configure the welding apparatus to perform welding operations and controls the welding laser 710. The memory 704 also comprises the weld file 705, which is read by the processor 702 for controlling the operation of the welding laser 710. The weld file 705 may be provided to the welding apparatus 190 by a server 720 communicatively coupled with the welding apparatus 190 via communication interface 714.

The memory 704 may also comprise instructions which when executed by the processor 702, configures the processor to perform positional analysis and to update the weld file 705, such as described in the method 600. Such implementation may in particular be performed when the welding apparatus 190 comprises a built-in optical scanner 712, such as a second (lower power such as low-power IR laser beam) laser that performs the positional measurements of the weld sites, for example an LDD weld monitoring system..

Alternatively, the positional measurements of the weld sites to determine the location of the battery cells and welding protrusions may be determined using an optical scanner 730 external to the welding apparatus 600, which may for example comprise a line scanner, vision system, optical camera, etc. The measurement data from optical scanner 730 may be provided to the welding apparatus 190 via communications interface 714 for updating the weld file 705. Alternatively, the measurement data from optical scanner 730 may be provided to server 720 for updating the weld file, and server 720 may send the updated weld file to the welding apparatus 190 via the communications interface 714. The initial weld file with expected weld positions is generally provided by the server 720 to the welding apparatus 190.

It would be appreciated by one of ordinary skill in the art that the system and components shown in the figures may include components not shown in the drawings. For simplicity and clarity of the illustration, elements in the figures are not necessarily to scale, are only schematic and are non-limiting of the elements structures. It will be apparent to persons skilled in the art that a number of variations and modifications can be made without departing from the scope of the invention as described herein.

It is contemplated that any part of any aspect or embodiment discussed in this specification can be implemented or combined with any part of any other aspect or embodiment discussed in this specification.

It should be recognized that features and aspects of the various examples provided above can be combined into further examples that also fall within the scope of the present disclosure.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

## Claims

1. A method of manufacturing a battery module comprising a plurality of battery cells, comprising:
clamping a battery pallet containing a plurality of battery cells to a clamping plate to cause a top portion of each of the plurality of battery cells to be in contact with the conductive lattice structure for welding, the conductive lattice structure comprising an electrical bus bar and a plurality of welding protrusions coupled to the bus bar, the battery pallet clamped to provide contact between a terminal of each of the plurality of battery cells and a respective welding protrusion;
scanning a region of the battery pallet to determine a location of each battery cell terminal in the region relative to the respective welding protrusion from a first welding apparatus viewpoint, wherein the battery pallet comprises a plurality of pre-defined regions each comprising a plurality of battery cells; and
updating a weld file used by a welding apparatus based on the location of each battery cell terminal relative to the respective welding protrusion.

2. The method of claim 1, wherein updating the weld file is performed based on the location of each battery cell terminal relative to the respective welding protrusion and an expected location of the battery cell terminal relative to the respective welding protrusion.

3. The method of claim 1 or claim 2, further comprising welding each battery cell terminal and the respective welding protrusion from the first welding apparatus viewpoint using the updated welding file.

4. The method of any one of claims 1 to 3, wherein updating the weld file comprises dynamically creating the weld file.

5. The method of any one of claims 1 to 4, wherein the weld file defines expected welding positions for welding each battery cell terminal and the respective welding protrusion from the first welding apparatus viewpoint, and wherein updating the weld file comprises calculating an offset between the expected welding positions and the locations of each battery cell terminal relative to the respective welding protrusion.

6. The method of any one of claims 1 to 5, wherein determining the location of each battery cell terminal comprises scanning to locate two points on the battery cell terminal, and determining a center of the battery cell based on the location of the two points and a known radius of the battery cell.

7. The method of any one of claims 1 to 6, wherein the clamping plate provides a plurality of apertures to facilitate welding the conductive lattice structure to each of the plurality of battery cells.

8. The method of claim 7, wherein scanning the region of the battery pallet further comprises determining if a gap exists between the clamping plate and the welding region, and if no gap exists, the method comprises stopping the welding process.

9. The method of claim 7 or claim 8, wherein the clamping plate comprises tapered portions along at least a portion of the apertures to facilitate welding from the first apparatus viewpoint.

10. The method of any one of claims 7 to 9, wherein the plurality of apertures of the clamping plate expose first weld sites between first cell terminals of the plurality of battery cells and respective of the plurality of welding protrusions, and wherein after all first cell terminals have been welded to the respective welding protrusions, the method further comprises clamping the battery pallet to a second clamping plate providing a second plurality of apertures to facilitate welding the conductive lattice structure to each of the plurality of battery cells, wherein the second plurality of apertures of the second clamping plate expose second weld sites between second cell terminals of the plurality of battery cells and respective of the plurality of welding protrusions.

11. The method of any one of claims 1 to 10, further comprising:
moving the welding apparatus to a second welding apparatus viewpoint;
scanning a second region of the battery pallet to determine a location of each battery cell terminal in the second region relative to the respective welding protrusion from the second welding apparatus viewpoint;
updating the weld file used by the welding apparatus based on the location of each battery cell terminal relative to the respective welding protrusion; and
welding each battery cell terminal and the respective welding protrusion in the second region of the battery pallet from the second welding apparatus viewpoint.

12. A welding system for welding a battery pallet having a plurality of battery cells to a conductive lattice structure, the welding system comprising:
an optical scanner configured to scan a region of the battery pallet clamped to the conductive lattice structure to determine a location of each battery cell terminal in the region relative to a respective welding protrusion of the conductive lattice structure from a first welding apparatus viewpoint; and
a processing unit configured to update a weld file used by a welding apparatus based on the location of each battery cell terminal relative to the respective welding protrusion.

13. The welding system of claim 12, wherein the optical scanner comprises a line scanner, a vision system, or an optical camera.

14. The welding system of claim 12, wherein the optical scanner comprises a scanning laser of the welding apparatus.

15. The welding system of any one of claims 12 to 14, further comprising the welding apparatus.
